(19) Europäisches Patentamt
European Patent Office
Office européen des brevets

(11) **EP 2 766 232 B1**

(12) **FASCICULE DE BREVET EUROPEEN**

(45) Date de publication et mention
de la délivrance du brevet:
**16.05.2018 Bulletin 2018/20**

(21) Numéro de dépôt: **12781381.4**

(22) Date de dépôt: **09.10.2012**

(51) Int Cl.:
*B60T 1/10* (2006.01)    *B60T 7/04* (2006.01)
*B60T 8/00* (2006.01)    *B60T 8/1755* (2006.01)
*B60T 8/50* (2006.01)    *B60T 13/58* (2006.01)
*B60T 17/22* (2006.01)    *B60W 10/08* (2006.01)
*B60W 20/00* (2016.01)    *B60W 30/18* (2012.01)
*B60T 8/26* (2006.01)    *B60W 10/184* (2012.01)

(86) Numéro de dépôt international:
**PCT/FR2012/052292**

(87) Numéro de publication internationale:
**WO 2013/054034 (18.04.2013 Gazette 2013/16)**

(54) **ADAPTATION D'UNE CONSIGNE DE FREINAGE REGENERATIF**

SOLLWERTANPASSUNG FÜR EINE NUTZBREMSUNG

REGENERATIVE BRAKING SETPOINT MATCHING

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **10.10.2011 FR 1159106**

(43) Date de publication de la demande:
**20.08.2014 Bulletin 2014/34**

(73) Titulaire: **Renault S.A.S.**
**92100 Boulogne-Billancourt (FR)**

(72) Inventeur: **AZZI, Hamid**
**78310 Maurepas (FR)**

(56) Documents cités:
**EP-A2- 1 306 263      EP-A2- 2 055 588
WO-A1-2005/110827    US-A1- 2002 138 182
US-A1- 2004 054 450    US-A1- 2005 200 197**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la commande de freinage pour un véhicule équipé d'un moyen de freinage régénératif, par exemple un moyen de freinage électrique, et d'un moyen de freinage complémentaire de type à friction, par exemple un moyen de freinage hydraulique, notamment sur un véhicule à motorisation électrique.

Sur un véhicule équipé d'au moins un moteur de traction ou de propulsion électrique, il est possible, sous certaines conditions d'utiliser le moteur électrique comme générateur et d'obtenir ainsi un moyen de freinage électrique. Une telle utilisation est avantageuse car régénérative, elle permet de récupérer une partie de l'énergie afin de recharger les batteries.

Un système de répartition a été conçu pour répartir une commande de freinage globale entre une commande de freinage électrique destinée à un moyen de freinage électrique et une commande de freinage complémentaire destinée à un moyen de freinage complémentaire. Ce système de répartition est agencé de façon à prévoir certaines transitions vers un freinage tout électrique ou purement par friction.

Par exemple, en cas de détection d'un dysfonctionnement de l'actionneur électrique, le freinage électrique est désactivé.

Selon un autre exemple, lorsque le véhicule roule à des vitesses relativement faibles, le freinage est totalement hydraulique. On prévoit donc de désactiver progressivement le freinage électrique, en fonction de la vitesse du véhicule.

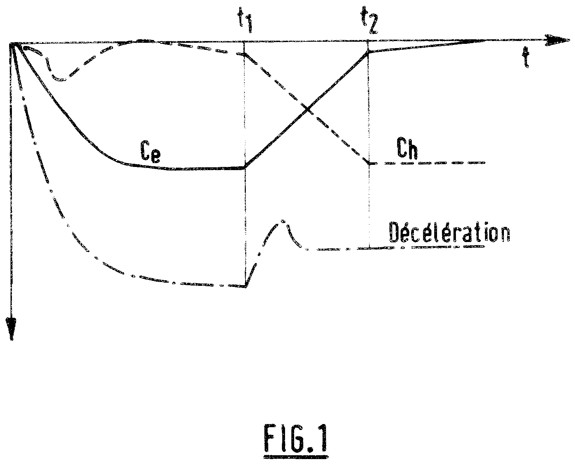

La figure 1 illustre cette transition dans une situation où le conducteur applique une commande de freinage constante de sorte que la vitesse diminue au cours du temps. L'instant t1 correspond à une vitesse de 14 km/h, l'instant t2 correspond à une vitesse véhicule de 7 km/h. La courbe pleine correspond à la consigne de freinage électrique, et la courbe en tirets correspond à la consigne de freinage hydraulique. Ces deux consignes sont déterminées par un système de répartition tel que décrit-ci-dessus, en fonction notamment d'une consigne de freinage globale correspondant à l'appui pédale du conducteur.

Comme on peut le relever sur la figure 1 ces deux seuils à 14 et 7 km/h correspondent à une transition vers un freinage hydraulique au fur et à mesure que le véhicule décélère.

Or les différents moyens de freinage d'un même véhicule peuvent avoir des temps de réponse différents. Par exemple un moyen de freinage électrique peut avoir un temps de réponse de l'ordre de 100 millisecondes, tandis que le temps de réponse d'un moyen de freinage hydraulique et le moyen peut être plutôt de l'ordre de 200 millisecondes.

Il arrive donc que le basculement d'un freinage tout électrique vers le tout hydraulique s'accompagne d'une courte variation du couple de freinage réellement appliqué. L'utilisateur peut ainsi avoir une sensation de dé-freinage liée à un tel trou de décélération.

Pour revenir à la figure 1, la courbe en tirets-points correspond à la décélération effective du véhicule. Comme on peut le constater, pour des vitesses légèrement en-deçà de 14 km/h, on observe une courte baisse du freinage effectif, et ce alors que l'utilisateur a un appui constant sur la pédale de frein

Ce trou de décélération peut donc être perturbant pour l'utilisateur qui pourra être amené à freiner davantage pour compenser. Ce phénomène est perturbant pour l'utilisateur d'autant qu'il n'arrivera pas à d'autres vitesses par exemple à 50 km/h.

Il existe donc un besoin pour un procédé et un système qui permettraient d'améliorer la perception de l'utilisateur.

Il a été envisagé d'étaler la transition décrite ci-dessus sur une plage de vitesse plus étendue, par exemple entre 20 et 7 km/h plutôt que entre 14 et 7 km/h, de sorte que le basculement soit plus lent. Néanmoins, ceci conduit à limiter le freinage régénératif et donc les possibilités de recharge des batteries.

Le document D1 divulgue un véhicule et une méthode de pilotage du freinage récupératif, qui présente les inconvénients précité.

Il est proposé un procédé d'adaptation de freinage pour un véhicule équipé d'un moyen de freinage régénératif, par exemple un moyen de freinage électrique, et d'un moyen de freinage complémentaire, par exemple un moyen de freinage hydraulique. Ce procédé comprend la génération d'une consigne de freinage adaptée à ces moyens de freinage, par filtrage temporel d'une consigne de freinage destinée à l'un de ces moyens de freinage, en particulier à la consigne de freinage régénérative destinée au moyen de freinage régénératif.

Le filtrage temporel peut par exemple consister à appliquer à la consigne de freinage un filtre linéaire d'ordre 1 en $e^{-\frac{t}{\tau}}$, un filtre de Bessel, ou autre, ou bien encore d'appliquer un retard systématique aux échantillons temporels de la consigne de freinage. On pourra prévoir un filtrage linéaire, ou non linéaire.

La constante de temps ou retard introduit peut avantageusement être judicieusement choisi, afin de faire disparaitre les périodes de sur-freinage ou de sous-freinage durant les transitions de la répartition d'une commande de freinage globale entre le moyen de freinage régénératif et le moyen de freinage complémentaire. Le retard peut par exemple être choisi égal à une différence entre une estimation du temps de réponse du moyen de freinage complémentaire et une estimation du temps de réponse du moyen de freinage régénératif.

Avantageusement, la consigne de freinage adaptée peut être fonction du sens de variation de la consigne de freinage destinée au moyen de freinage régénératif ou de la consigne de freinage destinée au moyen de freinage complémentaire.

Avantageusement, on peut prévoir une étape de détermination d'un sens de variation de cette consigne de freinage.

Avantageusement, la consigne de filtrage adaptée peut être non-filtrée lorsqu'on détecte une augmentation en valeur absolue de la consigne de freinage destinée au moyen de freinage régénératif. On évite ainsi de retarder l'application du freinage électrique et donc de limiter la récupération d'énergie. En outre, on évite ainsi les éventuelles sollicitations provisoires du moyen de freinage hydraulique, et donc le vieillissement prématuré de l'actionneur hydraulique.

On peut ainsi avantageusement prévoir une détection du sens de variation de la consigne de commande du moyen de freinage électrique, par exemple en comparant la consigne de commande du moyen de freinage électrique calculée par un dispositif de répartition à la consigne de commande de moyen de freinage électrique filtrée, c'est-à-dire par exemple la valeur en sortie du filtre temporel. Cette valeur filtrée correspond à la consigne du moyen de freinage électrique d'un instant précédent. Si la consigne filtrée est inférieure en valeur absolue à la consigne non filtrée, on peut présumer que la consigne du moyen de freinage électrique est en augmentation (en valeur absolue) et donc générer une valeur de consigne de freinage adaptée non filtrée. Par exemple le filtrage peut être désactivé, contourné, effectué avec une constante de temps nulle, etc.

A contrario, en cas de détection d'une diminution en valeur absolue de la consigne de freinage électrique, alors la valeur de consigne de freinage adaptée peut être une valeur filtrée temporellement.

On peut prévoir de comparer les valeurs de consigne de freinage électrique filtré aux valeurs respectives de consigne de freinage électrique avant filtrage. Ces valeurs étant négatives, une valeur de consigne correspondant à un freinage important aura une valeur absolue élevée.

A chaque instant d'échantillonnage, on peut calculer une valeur de différence égale à la valeur de consigne de freinage électrique issue d'un dispositif de répartition à laquelle on retire la valeur de consigne de freinage électrique filtré. Si cette différence est supérieure à un seuil, alors le filtrage est appliqué avec une constante de temps $\tau$ donnée. A contrario, si cette valeur est inférieure au seuil, alors la constante de temps $\tau$ est choisie égale à 0.

Avantageusement, ce seuil est choisi négatif avec une valeur proche de 0. En effet, si la consigne de freinage électrique varie relativement peu, alors il peut néanmoins exister un léger bruit. Prévoir un seuil légèrement négatif permet de générer des valeurs filtrées de façon stable, pour éviter les éventuelles successions filtrage/non filtrage liées à ce bruit.

L'invention n'est en rien limitée par le choix de valeurs non-filtrées lorsque la consigne de freinage électrique augmente en valeur absolue. On peut par exemple choisir pour la consigne de freinage adaptée des valeurs filtrées indépendamment des variations de la consigne de freinage électrique en sortie du dispositif de répartition. En cas d'augmentation en valeur absolue de la consigne de commande du moyen de freinage électrique, le filtrage peut permettre d'éviter un pic de sur-freinage.

Le dispositif de répartition peut être agencé de façon à limiter la valeur de la consigne de freinage électrique, voire à désactiver totalement le freinage régénératif en fonction des valeurs de signaux de sécurité. Par exemple, le système de répartition peut recevoir des signaux issus d'un superviseur apte à détecter une défaillance d'un capteur de l'actionneur électrique et/ou autre. En fonction de la valeur de ce signal, le freinage électrique peut être totalement désactivé. Selon un autre exemple, le système de répartition peut comporter un module indicateur de stabilité permettant de générer une valeur d'indicateur de stabilité. Cette valeur correspond au freinage électrique considéré comme acceptable par le véhicule. Selon les valeurs de l'indicateur de stabilité et du signal issu du superviseur, la valeur de consigne de freinage électrique peut être limitée en valeur absolue, voire ramenée à 0.

Avantageusement et de façon non limitative, la consigne de freinage adaptée est en outre fonction d'au moins un signal de sécurité, par exemple d'au moins un signal issu d'au moins un capteur et/ou d'un signal indicateur de stabilité. En effet, il peut être avantageux de ne pas retarder certaines désactivations ou limitations, car ces désactivations ou limitations peuvent être liées à la sécurité du conducteur et des passagers. Ce procédé peut ainsi prendre en compte de telles coupures prioritaires.

Avantageusement et de façon non limitative, on peut prévoir de limiter le signal filtré par le ou les signaux aptes à limiter en tout ou partie la consigne de freinage électrique dans le système de répartition, c'est-à-dire par exemple le signal indicateur de stabilité et/ou le signal issu du superviseur.

Le module de filtrage peut être compatible avec les systèmes de répartition déjà développés.

Avantageusement, les limitations liées à la sécurité peuvent être en outre effectuées en amont du module de filtrage, dans le système de répartition, afin d'éviter d'éliminer ces limitations lorsque le filtrage est contourné par exemple.

Il est en outre proposé un programme d'ordinateur comportant des instructions pour exécuter le procédé décrit ci-dessus. Ce programme peut être implémenté dans un processeur embarqué dans un véhicule automobile, par exemple un microcontrôleur, un DSP (de l'anglais « Digital Signal Processor »), ou autre.

Il est en outre proposé un dispositif d'adaptation de freinage pour un véhicule équipé d'un moyen de freinage régénératif et d'un moyen de freinage complémentaire. Ce dispositif est agencé pour générer une consigne de freinage adaptée à ces moyens de freinage, par filtrage temporel d'une consigne de freinage destinée à l'un de ces moyens de freinage, en particulier à la consigne de freinage régénérative destinée au moyen de freinage régénératif.

Il est en outre proposé un système de répartition comprenant un dispositif de répartition et un dispositif d'adaptation tel que décrit ci-dessus.

Il est en outre proposé un véhicule automobile, par exemple une voiture électrique ou hybride comprenant le système de répartition et/ou le dispositif d'adaptation décrit(s) ci-dessus.

L'invention sera mieux comprise en référence aux figures, lesquelles sont données à titre d'exemple.

- La figure 1, déjà commentée, est un graphe montrant l'évolution de la consigne de freinage électrique, de la consigne de freinage hydraulique et de la décélération effective au cours d'une période de freinage conducteur constant.
- La figure 2A est un schéma d'un système de répartition comprenant un dispositif de répartition et un dispositif d'adaptation selon un mode de réalisation de l'invention,
- La figure 2B est un schéma illustrant de façon plus détaillée un exemple de dispositif d'adaptation selon un mode de réalisation de l'invention,
- La figure 3 est un graphe montrant comment est calculé le retard introduit $\tau$ en fonction de la différence entre la consigne de freinage issu du système de répartition et la consigne de freinage électrique filtrée, dans un mode de réalisation de l'invention.

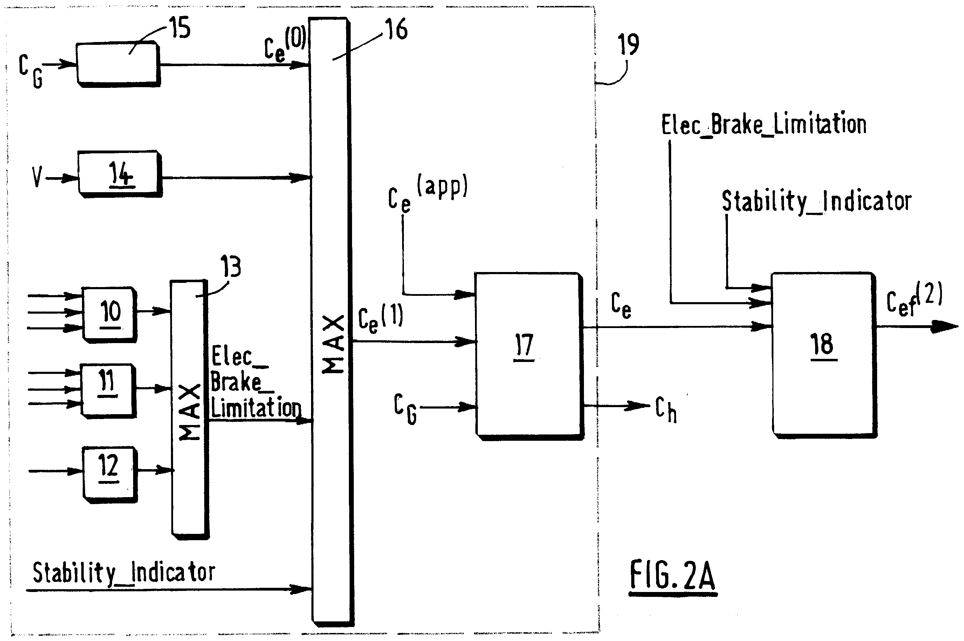

En référence à la figure 2A un dispositif de répartition 19 est installé dans un véhicule électrique (non représenté), avec une pédale de frein découplée. Ce véhicule comporte ainsi un moyen de freinage régénératif (non représenté), à savoir un actionneur électrique, et un moyen de freinage complémentaire, ici un actionneur hydraulique.

Ce dispositif 19 peut par exemple comprendre ou être intégré dans un ou plusieurs processeurs.

Ce dispositif 19 reçoit en entrée un signal $C_G$ de consigne de freinage global correspondant à un appui pédale et effectué par le conducteur. Un module de calcul 15 permet de déterminer une première valeur de freinage

électrique $C_e^{(0)}$ par saturation du signal reçu $C_G$.

Le système 19 reçoit en outre en entrée une valeur de vitesse du véhicule V. Un module 14 permet de déterminer un éventuel signal de désactivation du freinage régénératif en fonction de la vitesse du véhicule. Notamment, lorsque la vitesse du véhicule est inférieure à 7 km/h, le signal issu du module 14 permet de désactiver totalement le freinage électrique.

Le système de répartition reçoit en outre une valeur d'indicateur de stabilité en provenance d'un module indicateur de stabilité non représenté. En effet un freinage électrique implique seulement deux roues alors que le freinage hydraulique s'effectue sur les quatre roues du véhicule. Il existe donc un risque de en cas de freinage électrique trop abrupt.

La demande de brevet non publiée FR 1058539 décrit une architecture d'un système de freinage avec une surveillance de l'état des roues au moyen de capteurs. Les mesures effectuées par ce ou ces capteurs permettent d'élaborer un indicateur de stabilité Stability_Indicator pris en compte lors de la répartition de la commande de freinage pédale entre la commande de freinage électrique et la commande de freinage complémentaire. Ce module indicateur de stabilité est agencé pour déterminer un indicateur de stabilité réactualisé en temps réel en fonction de valeurs reçues de capteurs aptes à évaluer la vitesse, l'accélération longitudinale, l'accélération latérale et le taux de glissement des roues du véhicule. L'indicateur de stabilité peut en outre être fonction d'information sur un système de régulation d'anti blocage des freins (appelé régulation ABS pour Antiblockiersystem), ou un système d'anti patinage des roues. Lorsque le véhicule approche de l'instabilité, par exemple lors d'une régulation ABS sur le frein moteur, un tel signal permet de limiter le freinage régénératif de manière à ramener les roues dans leur domaine de stabilité.

La valeur de l'indicateur de stabilité Stability_Indicator correspond au freinage électrique considéré comme acceptable. Ces valeurs sont comprises entre 0, ce qui correspond au cas où le freinage doit être totalement hydraulique et une valeur maximale.

Le système de répartition reçoit en outre plusieurs signaux issus de capteurs (non représentés), de superviseurs (non représentés), etc.

Un module 10 reçoit des signaux issus de capteurs aptes à mesurer certains paramètres de l'actionneur électrique. Ce module 10 permet ainsi de générer un signal pour désactiver le freinage électrique en cas de détection de disfonctionnement du moyen de freinage régénératif.

Le module de désactivation sur signaux moteurs 11 reçoit des signaux en provenance de capteurs aptes à mesurer des valeurs de paramètre caractérisant l'état du moteur. Là encore, ce module 11 permet d'obtenir un signal de désactivation éventuel, en cas de détection de disfonctionnement.

De la même façon, le module 12 reçoit des signaux en provenance de capteurs et est apte à générer un signal de désactivation.

Un module 13 génère un signal Elec_Brake_Limitation, en effectuant un maximum des signaux issus des modules 10, 11, 12.

Les valeurs de consigne de freinage et de ces signaux de sécurité Elec_Brake_Limitation, Stability_Indicator sont négatives. En choisissant le signal ayant une valeur maximale, on choisit donc en fait le signal ayant la plus faible valeur absolue.

Le module 16 génère aussi un signal $C_e^{(1)}$ en effectuant également un maximum parmi les signaux issus des modules respectifs 14, 15, le signal de disfonctionnement Elec_Brake_Limitation et le signal Stability_Indicator.

Le signal $C_e^{(1)}$ issu du module 16 correspond à une première valeur de consigne de freinage électrique.

Le module 17 reçoit cette première valeur $C_e^{(1)}$ ainsi que la valeur $C_G$ correspondant à l'appui pédale du conducteur et un signal $C_e^{(app)}$ de couple de freinage électrique effectivement appliqué en réponse à la consigne $C_e^{(1)}$.

Le module 17 compare ces différentes valeurs et détermine une consigne de freinage électrique $C_e$ et une consigne de freinage hydraulique $C_h$. La consigne de freinage hydraulique $C_h$ peut être choisie égale à la différence entre la consigne de freinage globale $C_G$ et le couple effectivement appliqué $C_e^{(app)}$.

La demande non publiée FR 1153410 décrit des exemples plus détaillés de dispositifs de répartition.

Or l'actionneur hydraulique (non représenté) recevant en entrée cette consigne de freinage hydraulique $C_h$ présente un temps de réponse de l'ordre de 200 millisecondes, tandis que l'actionneur électrique a un temps de réponse plus court, de l'ordre de 100 millisecondes.

Un dispositif d'adaptation 18 permet de filtrer le signal $C_e$ de consigne de freinage électrique, afin que les actionneurs électriques et hydrauliques réalisent les consignes correspondantes avec des temps de réponse relativement proches. Ce dispositif d'adaptation 18 permet d'obtenir un signal de consigne de freinage électrique adapté $C_{e.f.}^{(2)}$.

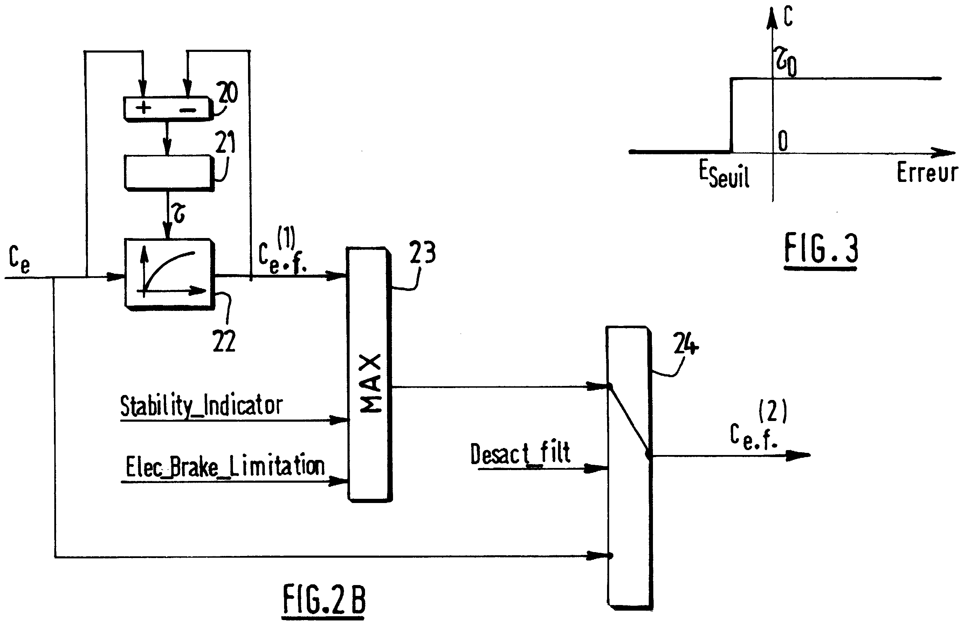

La figure 2B montre plus précisément ce dispositif d'adaptation 18.

En référence à cette figure 2B, le signal $C_e$ de consigne de freinage électrique issu du dispositif de répartition est reçu par un module de filtrage 22 apte à appliquer à ce signal un filtrage linéaire du premier ordre,

$$e^{-\frac{t}{\tau}},$$

avec une constante de temps $\tau$.

La valeur $\tau$ est choisie égale à une valeur $\tau_0$, par exemple égale à 100 millisecondes, ou bien nulle en fonction de la valeur d'une différence entre une valeur filtrée $C_{e.f.}^{(1)}$ et une valeur issue du dispositif de répartition $C_e$ à un instant d'échantillonnage donné. Cette différence Erreur est interprétée comme reflétant le sens de variation de la consigne de freinage électrique. Si cette différence Erreur, déterminée par un module 20 est supérieure à une valeur $E_{seuil}$ alors le retard $\tau$ est choisi égal à la valeur $\tau_0$ (voir figure 3). Dans le cas contraire le temps $\tau$ est choisi égal à zéro, c'est-à-dire que le module 22 n'induit alors aucun retard.

On peut par exemple choisir la valeur $\tau_0$ égale à la différence entre les temps de réponse des actionneurs électrique et hydraulique, ces temps de réponse étant issus d'une calibration ou d'une cartographie, ou bien encore mesurés.

Le module de filtrage reçoit en outre le signal Stability_Indicator, ainsi que le signal Elec_Brake_Limitation. Un module 23 permet de choisir le maximum (c'est-à-dire le minimum en valeur absolue) entre la valeur filtrée $C_{e.f.}^{(1)}$, le signal Stability_Indicator et le signal Elec_Brake_Limitation. Dit autrement, aucun retard n'est induit en cas de coupure prioritaire, liée à un disfonctionnement ou à un risque d'instabilité.

Dans ce mode de réalisation, le dispositif d'adaptation comporte en outre un module 24 commandé par un signal de désactivation de filtrage Desact_filt. Ce signal peut par exemple avoir une valeur booléenne. En fonction de la valeur de ce signal, la valeur de consigne adaptée $C_{e.f.}^{(2)}$ est choisie égale à la valeur de consigne de freinage régénératif $C_e$ en entrée du dispositif d'adaptation ou à la valeur en sortie du module 23.

Dans le mode de réalisation représenté, le module de filtrage 22 continue à fonctionner normalement, quelle que soit la valeur du signal Desact_filt. Dit autrement, on peut contourner de module de freinage 22 ainsi que le module 23.

Pour revenir à la figure 1, on notera qu'il est intéressant de conserver les signaux Stability_Indicator, Elec_Brake_Limitation en entrée du module 16. En effet, selon la valeur du signal Desact_filt, ces signaux de sécurité Stabillity_Indicator, Elec_Brake_Limitation pourraient ne pas être pris en compte par cette architecture du dispositif d'adaptation 18.

La présente invention n'est pas limitée à la présentation qui vient d'être faite et des variantes de réalisation peuvent être envisagées. Il peut en effet être envisagé que le filtrage soit direct ou non. Par exemple, il peut être prévu, en variante, de déterminer la consigne de freinage complémentaire au moyen d'un module de répartition, de filtrer cette consigne de freinage complémentaire, de déterminer la consigne de freinage régénérative à partir de la consigne filtrée et d'une consigne de freinage global, en réalisant un complément par exemple, et enfin d'appliquer :

- la consigne de freinage complémentaire non filtrée au moyen de freinage complémentaire, et
- la consigne de freinage régénérative (en fait, indirectement filtrée), au moyen de freinage régénératif.

**Revendications**

**1.** Procédé d'adaptation de freinage pour un véhicule équipé d'un moyen de freinage régénératif et d'un moyen de freinage complémentaire, comprenant la génération d'une consigne de freinage récupératif adaptée $\left(C_{e.f.}^{(2)}\right)$ auxdits moyens de freinage, par filtrage temporel d'une consigne de freinage (C$_e$) destinée à l'un desdits moyens de freinage, afin d'adapter le freinage régénératif à un temps de réponse du moyen de freinage complémentaire.

2. Procédé selon la revendication 1, dans lequel le filtrage temporel est appliqué à une consigne de freinage régénérative (C$_e$) destinée au moyen de freinage régénératif.

3. Procédé selon l'une des revendications 1 à 2, dans lequel la consigne de freinage adaptée $\left(C_{e.f.}^{(2)}\right)$ est fonction du sens de variation de la consigne de freinage destinée au moyen de freinage régénératif (C$_e$) et/ou de la consigne de freinage destinée au moyen de freinage complémentaire (C$_h$).

4. Procédé selon la revendication 3, comprenant une étape de détermination du sens de variation de la consigne de freinage destinée au moyen de freinage régénératif par comparaison d'une valeur de consigne (C$_e$) destinée à être filtrée temporellement à un instant donné à une valeur de consigne filtrée $\left(C_{e.f.}^{(1)}\right)$ audit instant donné.

5. Procédé selon l'une des revendications 3 ou 4, dans lequel, en cas de détection d'une augmentation en valeur absolue des valeurs de consigne de filtrage régénératif, la consigne de freinage adaptée $\left(C_{e.f.}^{(2)}\right)$ est non-filtrée.

6. Procédé selon l'une des revendications 1 à 5, dans lequel la consigne de freinage adaptée $\left(C_{e.f.}^{(2)}\right)$ est en outre fonction d'au moins un signal (Elec_Brake_Limitation) issu d'au moins un capteur dont la valeur indique un éventuel dysfonctionnement, et/ou d'au moins un signal indicateur de stabilité (Stability_Indicator).

7. Programme d'ordinateur comportant des instructions pour exécuter le procédé selon l'une des revendications 1 à 6.

8. Dispositif d'adaptation de freinage (18) pour un véhicule équipé d'un moyen de freinage régénératif et d'un moyen de freinage complémentaire, ledit dispositif étant agencé pour générer une consigne de freinage adaptée $\left(C_{e.f.}^{(2)}\right)$ auxdits moyens de freinage, par filtrage temporel d'une consigne de freinage (C$_e$) destinée à l'un desdits moyens de freinage, afin d'adapter le freinage régénératif à un temps de réponse du moyen de freinage complémentaire.

9. Système de répartition de freinage pour un véhicule équipé d'un moyen de freinage régénératif et d'un moyen de freinage complémentaire, comportant un dispositif de répartition (19) d'une commande de freinage (C$_G$) entre une consigne de freinage régénératif (C$_e$) destinée audit moyen de freinage régénératif et une consigne de freinage complémentaire (C$_h$) destinée audit moyen de freinage complémentaire, et un dispositif d'adaptation (18) de la consigne de freinage régénératif selon la revendication 8.

10. Véhicule automobile équipé d'un moyen de freinage régénératif, d'un moyen de freinage complémentaire et d'un système de répartition de freinage selon la revendication 9.

**Patentansprüche**

1. Verfahren zur Anpassung einer Bremsung für ein Fahrzeug, das mit einer Nutzbremseinrichtung und einer ergänzenden Bremseinrichtung ausgestattet ist, umfassend das Erzeugen eines Rekuperationsbremssollwerts $\left(C_{e.f.}^{(2)}\right)$ der an die Bremseinrichtungen angepasst ist, durch zeitliche Filterung eines Bremssollwerts (C$_e$), der für eine der Bremseinrichtungen bestimmt ist, um die Nutzbremsung an eine Antwortzeit der ergänzenden Bremseinrichtung anzupassen.

2. Verfahren nach Anspruch 1, wobei die zeitliche Filterung auf einen Nutzbremssollwert (C$_e$) angewandt wird, der für die Nutzbremseinrichtung bestimmt ist.

3. Verfahren nach einem der Ansprüche 1 bis 2, wobei der angepasste Bremssollwert $\left(C_{e.f.}^{(2)}\right)$ von der Änderungsrichtung des Bremssollwerts, der für die Nutzbremseinrichtung (C$_e$) bestimmt ist, und/oder des Bremssollwerts, der für die ergänzende Bremseinrichtung (C$_h$) bestimmt ist, abhängig ist.

4. Verfahren nach Anspruch 3, umfassend einen Schritt des Ermittelns der Änderungsrichtung des Bremssollwerts, der für die Nutzbremseinrichtung bestimmt ist, durch Vergleichen eines Sollwerts (C$_e$), der dazu bestimmt ist, zu einem bestimmten Zeitpunkt zu einem gefilterten Sollwert $\left(C_{e.f.}^{(1)}\right)$ an dem bestimmten Zeitpunkt gefiltert zu werden.

**5.** Verfahren nach einem der Ansprüche 3 oder 4, wobei im Falle einer Feststellung eines Absolutwertanstiegs der Nutzfilterungssollwerte der angepasste Bremssollwert $\left(C_{e.f.}^{(2)}\right)$ ungefiltert ist.

**6.** Verfahren nach einem der Ansprüche 1 bis 5, wobei der angepasste Bremssollwert $\left(C_{e.f.}^{(2)}\right)$ ferner von mindestens einem Signal (Elec_Brake_Limitation), das von mindestens einem Sensor kommt, dessen Wert eine eventuelle Funktionsstörung anzeigt, und/oder von mindestens einem Signal, das Stabilität anzeigt (Stability_Indicator), abhängig ist.

**7.** Computerprogramm, das Anweisungen aufweist, um das Verfahren nach einem der Ansprüche 1 bis 6 auszuführen.

**8.** Vorrichtung zur Anpassung einer Bremsung (18) für ein Fahrzeug, das mit einer Nutzbremseinrichtung und einer ergänzenden Bremseinrichtung ausgestattet ist, wobei die Vorrichtung angeordnet ist, einen Bremssollwert $\left(C_{e.f.}^{(2)}\right)$ zu erzeugen, der an die Bremseinrichtungen angepasst ist, durch zeitliche Filterung eines Bremssollwerts ($C_e$), der für eine der Bremseinrichtungen bestimmt ist, um die Nutzbremsung an eine Antwortzeit der ergänzenden Bremseinrichtung anzupassen.

**9.** System zur Bremsaufteilung für ein Fahrzeug, das mit einer Nutzbremseinrichtung und einer ergänzenden Bremseinrichtung ausgestattet ist, umfassend eine Vorrichtung zur Aufteilung (19) eines Bremsbefehls ($C_G$) zwischen einem Nutzbremssollwert ($C_e$), der für die Nutzbremseinrichtung bestimmt ist, und einem Nutzwert einer ergänzenden Bremsung ($C_h$), der für die ergänzende Bremseinrichtung bestimmt ist, und eine Vorrichtung zur Anpassung (18) des Nutzbremssollwerts nach Anspruch 8.

**10.** Kraftfahrzeug, das mit einer Nutzbremseinrichtung, einer ergänzenden Bremseinrichtung und einem System zur Bremsaufteilung nach Anspruch 9 ausgestattet ist.

**Claims**

**1.** Method for matching braking for a vehicle equipped with a regenerative braking means and with an additional braking means, comprising the generation of a matched regenerative braking setpoint $\left(C_{e.f.}^{(2)}\right)$ matched to said braking means, by the temporal filtering of a braking setpoint ($C_e$) intended for one of said braking means, in order to adapt the regenerative braking to a response time of the additional braking means.

**2.** Method as claimed in Claim 1, in which the temporal filtering is applied to a regenerative braking setpoint ($C_e$) intended for the regenerative braking means.

**3.** Method as claimed in either of Claims 1 and 2, in which the matched braking setpoint $\left(C_{e.f.}^{(2)}\right)$ is a function of the direction of variation of the braking setpoint intended for the regenerative braking means ($C_e$) and/or of the braking setpoint intended for the additional braking means ($C_h$).

**4.** Method as claimed in Claim 3, comprising a step of determining the direction of variation of the braking setpoint intended for the regenerative braking means by comparing a setpoint value ($C_e$) intended to undergo temporal filtering at a given instant with a setpoint value $\left(C_{e.f.}^{(1)}\right)$ that is filtered at said given instant.

**5.** Method as claimed in either of Claims 3 and 4, in which, if an increase in absolute value is detected in the regenerative filtering setpoint values then the matched braking setpoint $\left(C_{e.f.}^{(2)}\right)$ is unfiltered.

**6.** Method as claimed in one of Claims 1 to 5, in which the matched braking setpoint $\left(C_{e.f.}^{(2)}\right)$ is also a function of at least one signal (Elec_Brake_Limitation) emanating from at least one sensor the value of which indicates a possible malfunction and/or of at least one stability indicator signal (Stability_Indicator).

**7.** Computer program comprising instructions for executing the method as claimed in one of Claims 1 to 6.

**8.** Braking matching device (18) for a vehicle equipped with a regenerative braking means, and with an additional braking means, said device being designed to generate a matched braking setpoint $\left(C_{e.f.}^{(2)}\right)$ matched to said braking means, by the temporal filtering of a braking setpoint ($C_e$) intended for one of said braking means, in order to adapt the regenerative braking to a response time of the additional braking means.

**9.** Brake apportioning system for a vehicle equipped with a regenerative braking means and with an additional braking means, comprising
an apportioning device (19) for apportioning a braking command ($C_G$) between a regenerative braking setpoint ($C_e$) intended for said regenerative braking means and an additional braking setpoint ($C_h$) intended for said additional braking means, and
a matching device (18) for matching the regenerative braking setpoint as claimed in Claim 8.

10. Motor vehicle equipped with a regenerative braking means, with an additional braking means, and with a brake apportioning system as claimed in Claim 9.

FIG.1

FIG.2A

FIG.2B

FIG.3

EP 2 766 232 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1058539

- FR 1153410